# NEUE EUROPÄISCHE PATENTSCHRIFT

(11) **EP 0 062 930 B2**
(45) Veröffentlichungstag und Bekanntmachung des Hinweises auf die Entscheidung über den Einspruch: **03.02.1993**
(45) Hinweis auf die Patenterteilung: 22.05.1985
(21) Anmeldenummer: 82200153.3
(22) Anmeldetag: 11.02.1982
(51) Int. Cl.: C01B 17/54

(54) **Verfahren zum Erzeugen eines schwefeltrioxidhaltigen Gases für die Abgasreinigung im Elektrofilter**
Process for producing a gas containing sulphur trioxide for waste gas purification in an electrostatic precipitator
Procédé pour la production d'un gaz contenant du trioxyde de soufre pour la purification de gaz d'échappement dans un appareil de précipitation électrostatique

(30) Priorität: 07.03.1981 DE 3108709; 14.03.1981 DE 3109847; 15.06.1981 DE 3123666
(43) Veröffentlichungstag der Anmeldung: 20.10.1982
(73) Patentinhaber: METALLGESELLSCHAFT AG, 60015 Frankfurt (DE)
(72) Erfinder: Bode, Hans-Jürgen, D-6000 Frankfurt am Main (DE); Leussler, Wilhelm, D-6230 Frankfurt am Main 80 (DE); Graubner, Hans Joachim, D-6232 Bad Soden (Ts.) (DE); Reissmann, Helmut, Dr., D-6380 Bad Homburg (DE); Schummer, Helmut, D-6056 Heusenstamm (DE); Mayer-Schwinning, Gernot, D-6380 Bad Homburg (DE)
(74) Vertreter: Rieger, Harald, Dr.

(56) Entgegenhaltungen:
- DE-B- 1 177 117
- DE-B- 1 467 007
- US-A- 3 424 560
- US-A- 3 993 429
- Angebot vom 26.2.81 Fa. Walther & Cie AG an EDF Central de Vitry, Seine
- Brief vom 27.1.81 Fa. Grillo AG an Fa. Walther & Cie AG
- Notiz vom 13.1.81 Fa. Walther & Cie AG
- Angebot vom 29.6.79 Fa. Wahlco Inc. an Fa. Walther& Cie AG
- Zeichnung vom 3.11.80 Fa. Walther AG
- Bericht vom April 1980 einer Versammlung von Lizenzinhabern "Flue Gas Electrostatic Precipitator Sizing, Conditioning and Last Experiences"
- Telex 16.3.81 EDF Nancy an Fa. Walther AG

## Beschreibung

Die Erfindung betriff ein Verfahren zum Erzeugen eines S0₃-haltigen Gases durch Verbrennen von Schwefel mit von einem Gebläse geförderter Verbrennungsluft in einem Ofen zur Erzeugung eines S0₂-reichen Verbrennungsgases, das durch einen Konverter zum katalytischen Umwandeln von S0₂ in Gegenwart von Sauerstoff zu S0₃ geleitet und einem wasserdampfhaitigen Abgas vor der Reinigung in einem Elektrofilter zugemischt wird, wobei der Schwefel in flüssiger Form über eine Dosiereinrichtung und die Verbrennungsluft durch einen Lufterhitzer dem Ofen zugeführt werden.

Ein solches Verfahren ist aus dem US-Patent 3 993 429 bekannt. Für das bekannte und das erfindungsgemässe Verfahren ist es von entscheidender Bedeutung, auf welche Weise das Verfahren gesteuert wird. Beim bekannten Verfahren misst man die Temperatur im Verbrennungsgas hinter dem Ofen und regelt damit den Erhitzer für die Verbrennungsluft.

Die Regelung des eingangs genannten Verfahrens wird aus verschiedenen Gründen nötig. Insbesondere treten wecheselnde Bedingungen in der im Elektrofilter stattfindenden Abgasentstaubung z. B. dann auf, wenn sich die Brennstoffqualitäten in der das Abgas produzierenden Verbrennung ändern. Bei dieser Verbrennung kann es sich z.B. um einen oder mehrere Kessel eines Kraftwerks handeln. Auch wechselnde Lastbedingungen im Kessel führen zu Veränderungen im Abgas, was zu Anderungen der Betriebsbedingungen des Elektrofilters führt. Einem verstärkten Staubgehalt im Abgas kann durch eine erhöhte Zudosierung von S0₃ begegnetwerden. Das S0₃ reagiert mit dem Wasserdampf des Abgases zu H₂S0₄ und verbessert die Abscheideleistung des Elektrofilters beträchtlich.

Der Erfindung liegt die Aufgabe zugrunde, die Betriebsbedingungen im Ofen und/oder Konverter auf einfache und sichere Weise und mit möglichst geringer Trägheit zu regeln. Zur Lösung dieser Aufgabe wird beim eingangs genannten Verfahren durch über eine direkte Leitung von der Dosiereinrichtung zum Lufterhitzer geführte Ragalungssignale der Lufterhitzer so gesteuert, dass dem Ofen bei verringerter Schwefelzufuhr Verbrennungsluft mit höheren Temperaturen zugeführt wird. Mit Hilfe derZeichnung werden Varianten dieses Verfahrens erläutert. In den Figuren der Zeichnung werden gleiche Bezugsziffern für gleiche Vorrichtungsteile verwendet.

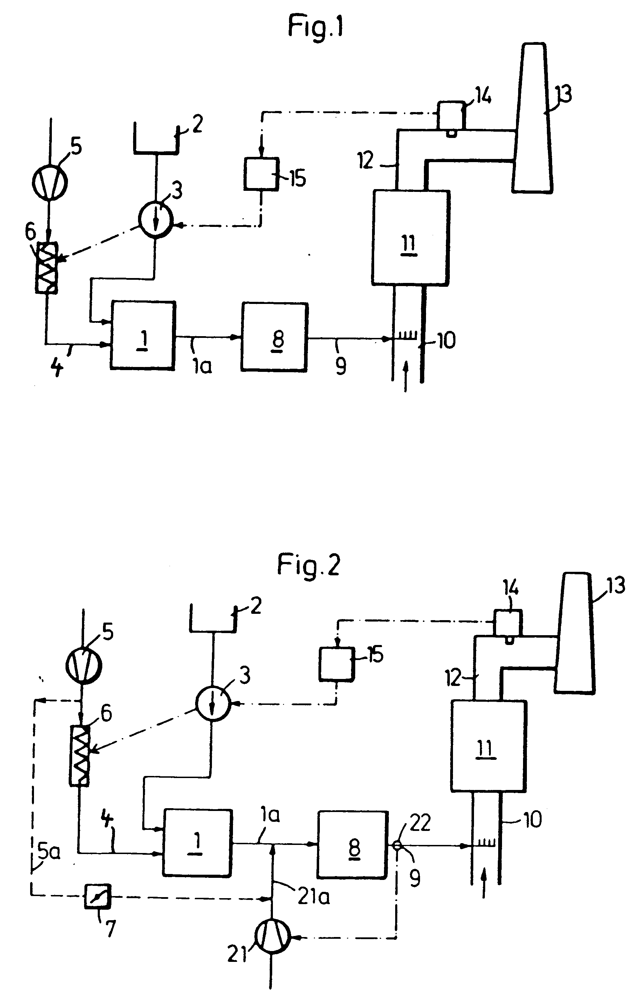

In der Anordnung der Fig. 1 wird Schwefel im Ofen 1 verbrannt. Der Schwefel kommt aus einem Tank 2, in dem er flüssig gehalten wird. über eine Dosierpumpe 3 wird der Schwefel dem Ofen 1 zugeführt. Verbrennungsluft wird dem Ofen durch die Leitung 4 zugegeben. Die Verbrennungsluft wird durch ein Gebläse 5 angesaugt und durch einen abschaltbaren Lufterhitzer geführt, derzweckmässigerweise elektrisch beheizt wird. Die Regelung der Verbrennung im Ofen 1 erfolgt durch geeignetes Einstellen der Temperatur und eventuell auch der Menge der Verbrennungsluft.

Das im Ofen 1 erzeugte Verbrennungsgas ist reich an S0₂ und hat am Ausgang des Ofens Temperaturen im Bereich von etwa 400 bis 800°C. Zum Umwandeln von S0₂ in S0₃ wird das Verbrennungsgas durch einen Konverter 8 geleitet, der einen geeigneten Katalysator enthält. Für bekannte Katalysatoren (z. B. Vanadiumpentoxid) wird vorausgesetzt, dass die Temperatur am Eingang des Konverts 8 im Bereich von etwa 380 bis 500°C und vorzugsweise 420 bis 480°C liegt. Die Umsetzung im Konverter 8 verläuft exotherm, wobei die Temperatur am Ausgang des Konverters umso höher liegt, je höher die Temperatur des Gases am Eingang des Konverters ist.

Um die Temperaturgrenzen am Eingang des Konverters 8 einzuhalten, kann man einerseits die Verbrennung im Ofen 1 so regeln, dass das Verbrennungsgas in der Leitung 1 a die gewünschte Temperatur aufweist. Andererseits ist es möglich, im Ofen 1 ein heisseres Verbrennungsgas zu erzeugen und ihm vor Eintritt in den Konverter Luft, die nachfolgend Kühlluft genannt wird und z.B. Umgebungstemperatur aufweist, zuzumischen. Diese Möglichkeiten können natürlich auch miteinander kombiniert werden.

Das S0₃-haltige Gas Bus dem Konverter 8 wird durch die Leitung 9 in den Rauchgaskanal 10 gegeben. Das so konditionierte Rauchgas strömt durch den Elektrofilter 11 und wird dort entstaubt. Durch den Reingaskanal 12 gelangt das entstaubte Abgas in den Kamin 13.

Eine Regelungsvariante besteht nun darin, mit Hilfe des Rauchdichtemessgeräts 14 den Staubgehalt im Reingas zu messen, die Messwerte einem Regler 15 einzuspeisen und damit die Schwefeldosierpumpe 3 zu steuern. Die Regelungssignale werden in der Zeichnung stets durch strichpunktien gezeichnete Leitungen geführt. Je nach Einstellung der Dosierpumpe 3 durch den Regler 15 ist es möglich und im allgemeinen auch nötig, weitere Verfahrensbedingungen zu ändern, damit die Erzeugung von S0₃-haltigem Gas in der gewünschten Weise weiterläuft. In Fig. 1 ist die Variante dargestellt, dass über die Dosierpumpe 3 der Lufterhitzer 6 gesteuert wird. Dabei erfordert eine abnehmende Schwefelmange eine Erhöhung der Temperatur der Verbrennungsluft in der Leitung 4, damit die Temperatur des Verbrennungsgases am Ausgang des Ofens 1 ungefähr konstant gehalten wird.

Für den Normalbetrieb (Nennlast) kann eine zusätzliche Regelung entfallen, und die Schwefeldosierung wird so eingestellt, dass die vom Gebläse 5 dem Ofen 1 zugeführte Verbrennungsluft nicht erhitzt zu werden braucht. Des Verbrennungsgas am Ausgang des Ofens 1 hat dabei eine Temperatur von etwa 440°C; diese Temperatur liegt in dem Temperaturbereich, der am Eingang des Konverters 8 gewünscht wird. Bei Verminderung der dem Ofen 1 zugeführten Schwefelmenge muss die Verbrennungsluft mit Hilfe des Erhitzers 6 vorgewärmt werden.

Auch wenn der Erhitzer 6 bei normaler Schwefeldosierung abgeschaltet sein kann, ist er als Aggregat nicht überflüssig. Er wird z.B. dann gebraucht, wenn der Ofen 1 und der Konverter 8 beim Anfahren derAnlage mit heisser Luft anzuwärmen sind, ohne dass dabei allerdings schon Schwefel verbrannt wird. Bei abgeschalteter Schwefeldosierung kann heisse Luft auch dann erforderlich werden, wenn die erwähnten Aggregate mit Warmluft gespült werden müssen.

Es ist möglich, die Dosierpumpe 3 von Hand zu steuern, wenn der Bedienungsperson Erfahrungswerte über die nötigen Steuerungsmassnahmen vorliegen. Auf das Messgerät 14 und den Regler 15 kann dann verzichtet werden. Eine weitere Variante besteht darin, anstelle des Rauchdichtemessgerätes 14 die Abgasmenge in der Leitung 10 oder 12 zu messen und damit über den Regler 15 die Dosierpumpe 3 zu steuern.

Im Verfahrensbeispiel der Fig. 2 wird Kühlluft durch das Gebläse 21 angesaugt und durch die Leitung 21 a dem Verbrennungsgas in der Leitung 1 a zugemischt. Abweichend von der Darstellung in Fig. 2 kann man auf das separate Gebläse 21 auch verzichten und die Kühlluft nach Gebläse 5 abzweigen und durch die gestrichelt gezeichnete Leitung 5a dem Verbrennungsgas zuführen. Üblicherweise werden nur geringe Mengen an Kühlluft gebraucht, so dass man ein separates Kühlluftgebläse zumeist entbehren kann.

Eine Feinregelung der im Konverter 8 aufrechtzuerhaltenden Bedingungen erfolgt mit Hilfe der Temperaturmessstelle 22, die sich in der Leitung 9 befindet. Die in der Messstelle 22 gemessene Temperatur steuert des Gebläse 21 für die Kühlluftzufuhr so, dass am Eingang des Konverters 8 die gewünschte Temperatur z. B. im Bereich von 420-480°C herrscht. Abweichend von der Darstellung der Fig. 1 kann die Temperaturmessstelle 22 auch am Eingang des Konverters 8 liegen. Falls das Gebläse 21 nicht vorhanden und an seine Stelle die Abzweigleitung 5a getreten ist, muss in der Leitung 5a z.B. eine Drosselklappe 7 vorgesehen werden, die über die Temperaturmessstelle 22 angesteuert wird.

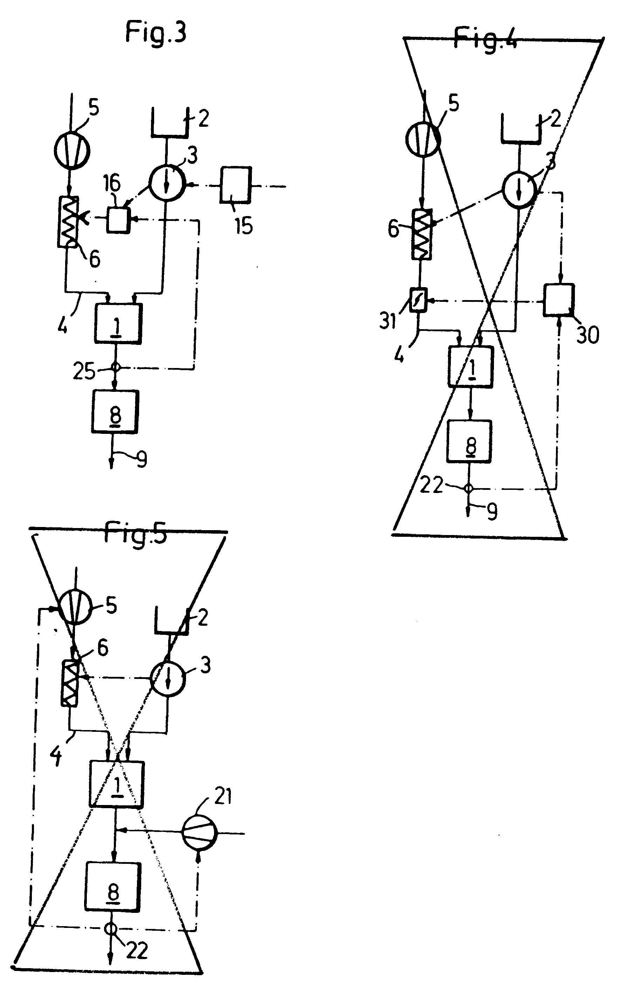

In der Verfahrensvariante der Fig. 3 erfolgt eine Feinregelung mit Hilfe der Tempareturmessstelle 25, die sich in der Zeichnung etwa Bm Eingang zum Konverter 8 befindet. Eine andere Möglichkeit ist, die Temperaturmessstelle 25 in die Leitung 9 hinter den Konverter zu legen. Die in der Messstelle 25 gemessene Temperatur geht in einen Verhältnisregler 16 als zusätzlicher Regelwert neben dem Regelungssignal von der Dosierpumpe 3 ein. Das vom Verhältnisregler 16 ausgehende, zum Erhitzer 6 laufende Steuersignal ergibt sich demnach aus einer Zusammenfassung des Signals von der Dosierpumpe 3 und des Temperatursignals von der Messstelle 25. Ziel der Regelung ist es, die Temperatur an der Messstelle 25 ungefähr konstant zu halten, vor allem deshalb, um den Konverter 8 vor Überhitzung zu schützen oder Schwankungen der Aussenlufttemperatur auszugleichen. In Fig. 3 ist zur Vereinfachung der in Fig. 1 und 2 dargestellte Rauchgas- und Reingasteil weggelassen. Abweichend von den obigen Erläuterungen kann die Temperaturmessstelle 25 beispielsweise auch vor oder hinter dem Frischluftgebläse 5 oder auch nach dem Lufterhitzter 6 in der Leitung 4 liegen.

In den nachfolgend beschriebenen Beispielen ist das Rauchgas eines kohlegefeuerten Kraftwerks von 300 MW mittels Elektrofilter zu entstauben. Stets gilt, dass im Normalbetrieb pro Stunde 50 kg Schwefel im Ofen 1 verbrannt werden müssen, um die S0₃-Zumischung zum Rauchgaskanal 10 auf 30 ppm zu halten. Die Temperatur am Eingang des Konverter soll ungefähr 440° C betragen; die temperatur am Konverterausgang liegt etwa 50°C höher.

### Beispiel 1

In der Variante der Fig. 1 ist der Lufterhitzer 6 im Normalbetrieb ausgeschaltet; dem Ofen werden pro Stunde ca. 800 m³ Verbrennungsluft zugeführt. Wird der S0₃-Bedarf im Rauchgaskanal 10 auf 20 ppm reduziert, sind pro Stunde nur noch ca. 34 kg Schwefel im Ofen 1 zu verbrennen. Die nun erforderliche zusätzliche Heizleistung durch den Erhitzer 6 beträgt 51 kW, damit die Temperatur der Verbrennungsgase in der Leitung 1a unverändert bleibt.

### Beispiel 2

In der Anordnung der Fig. 2 sind der Lufterhitzer 6 und die Zufuhr von Kühlluft durch die Leitung 21a im Normalbetrieb abgeschaltet. Bei einerAussentemperatur von 0°C sind für diesen Normalbetrieb pro Stunde 800 m³ Verbrennungsluft durch die Leitung 4 erforderlich; in der Messstelle 22 wird eine Temperatur von etwa 520°C gemessen. Kann der S0₃-Bedarf im Rauchgaskanal 10 auf 20 ppm reduziert werden, sind wie im Beispiel 1 pro Stunde ca. 34 kg Schwefel zu verbrennen und der Erhitzer 6 auf eine Heizleistung von 51 kW einzustellen. Steigt die Aussentemperatur auf 30°C an, werden durch dar Gebläse 21 dem Verbrennungsgas des Ofens 1 pro Stunde etwa 60 m³ Kühlluft beigemischt.

### Beispiel 3

Der Normalbetrieb der Variante gemäss Fig. 3 sieht eine Aussentemperaturvon 30°C vor, wobei der Lufterhitzer 6 ausgeschaltet ist. Bei Abnahme der Schwefeldosierung um 1 kg/h muss die Heizleistung des Erhitzers 6 um etwa 3 kW erhöht werden. Die Menge der Verbrennungsluft liegt konstant etwa 800 m³/h. Beim Absinken der Aussenlufttemperatur auf 10°C wird die Heizleistung des Erhitzers auf etwa 5 kW eingestellt.

## Patentansprüche

1. Verfahren zum Erzeugen eines S0₃-haltigen Gases durch Verbrennen von Schwefel mit von einem Gebläse geförderter Verbrennungsluft in einem Ofen zur Erzeugung eines S0₂-reichen Verbrennungsgases, das durch einen Konverterzum katalytischen Umwandeln von S0₂ in Gegenwert von Sauerstoff zu S0₃ geleitet und einem wasserdampfhaltigen Abgas vor der Reinigung in einem Elektrofilter zugemischt wird, wobei der Schwefel in flüssiger Form über eine Dosiereinrichtung und die Verbrennungsluft durch einen Lufterhitzer dem Ofen zugeführt werden, dadurch gekennzeichnet, dass man durch über eine direkte Leitung von der Dosiereinrichtung zum Lufterhitzer geführte Regelungssignale den Lufterhitzer so steuert, dass dem Ofen bei verringerter Schwefelzuführ Verbrennungsluft mit höheren Temperaturen zugeführt wird.

2. Verfahren nach Anspruch 1, dadurch gekennzeichnet, dass man die Temperatur am Eingang oder Ausgang der Konverters misst und damit die Menge der dem Verbrennungsgas zuzumischenden Kühlluft regelt.

3. Verfahren nach Anspruch 1 oder 2, dadurch gekennzeichnet, dass man die Temperatur am Eingang oder Ausgang des Konverters misst und damit die Heizleistung des Lufterhitzers zusätzlich regelt.

4. Verfahren nach Anspruch 1 oder einem der folgenden, dadurch gekennzeichnet, dass man die Schwefeldosierung über eine Messung des Staubgehalts im das Elektrofilter verlassenden Reingas regelt.

5. Verfahren nach Anspruch 1 oder einem der folgenden, dadurch gekennzeichnet, dass man die Schwefeldosierung über eine Messung der Abgasmenge vor oder nach der Reinigung im Elektrofilter regelt.

## Claims

1. A process of producing an S0₃-containing gas wherein sulfur is burnt in a furnace with blower- fed combustion air to produce a high-S0₂ combustion gas, which is passed through a converter for the catalytic conversion of S0₂ in the presence of oxygen to S0₃ and is admixed to a water vapor- containing exhaust gas before the latter is purified in an electrostatic precipitator, and the furnace is fed with the sulfur in liquid form by a proportioning feeder and with combustion air trough an air heater, characterized in that the air heater is controlled in dependence of the sulfur supply rate by control signals transmitted by a direct line from the proportioning feeder to the air heater so that combustion air at higher temperatures is fed to the furnace in case of a lower sulfur supply rate.

2. A process according to claim 1, characterized in that the temperature at the inlet or outlet of the converter is measured and the rate of cooling air admixed to the combustion gas is controlled in dependence on said temperature.

3. A process according to claim 1 or 2 characterized in that the temperature at the inlet or outlet of the converter is measured and the heat rate of the air heater is additionally controlled in dependence on said temperature.

4. A process according to claim 1 or any of the following claims, characterized in that the sulfur supply rate is controlled in dependence on the measured dust content of the pure gas leaving the electrostatic precipitator.

5. A process according to claim 1 or any of the following claims, characterized in that the sulfur supply reate is controlled in dependence on the measured rate of exhaust gas before or after its purification in the electrostatic precipitator.

## Revendications

1. Procédé de production d'un gaz contenant du S0₃, par combustion de soufre avec de l'air de combustion envoyé par une soufflante dans un four, pour produire un gaz de combustion riche en S0₂, qui est envoyé dans un convertisseur pour la transformation catalytique de S0₂ en S0₃ en présence d'oxygène et qui est mélangé à un gaz résiduaire contenant de la vapeur d'eau, avant l'épuration dans un électrofiltre, le soufre étant envoyé au four sous forme liquide par un dispositif de dosage, et l'air de combustion étant envoyé au four en passant par un réchauffeur d'air, caractérisé en ce qu'il consiste à commander le réchauffeur d'air par des signaux de régulation envoyés au réchauffeurd'air parune ligne directe depuis le dispositif de dosage, de manière à alimenter le four en air de combustion à température plus élevée quand on envoie moins de soufre.

2. Procédé suivant la revendication 1, caractérisé en ce qu'il consiste à mesurer la température à l'entrée ou à la sortie du convertisseur, et à régler ainsi la quantité d'air de refroidissement mélangée au gaz de combustion.

3. Procédé suivant la revendication 1 ou 2, caractérisé en ce qu'il consiste à mesurer la température, à l'entrée ou à la sortie du convertisseur, et à régler en outre ainsi la puissance de chauffage du réchauffeur d'air.

4. Procédé suivant la revendication 1 ou l'une des revendications suivantes, caractérisé en ce qu'il consiste à régler le dosage du soufre par une mesure de la teneur en poussière dans le gaz épuré quittant l'électrofiltre.

5. Procédé suivant la revendication 1 ou l'une des revendications suivantes, caractérisé en ce qu'il consiste à régler le dosage du soufre par une mesure de la quantité de gaz résiduaire avant ou après l'épuration dans l'électrofiltre.
